# EUROPÄISCHE PATENTSCHRIFT

(11) **EP 2 802 950 B1**
(45) Veröffentlichungstag und Bekanntmachung des Hinweises auf die Patenterteilung: **10.05.2017**
(21) Anmeldenummer: 12788203.3
(22) Anmeldetag: 20.11.2012
(51) Int. Cl.: A01D 34/00, G05D 1/02, B60L 3/10, B60L 1/00, B60L 11/18, B60L 15/20

(54) **AUTONOMES ARBEITSGERÄT**
AUTONOMOUS WORKING DEVICE
DISPOSITIF DE TRAVAIL AUTONOME

(30) Priorität: 13.01.2012 DE 102012200445
(43) Veröffentlichungstag der Anmeldung: 19.11.2014
(73) Patentinhaber: Robert Bosch GmbH, 70442 Stuttgart (DE)
(72) Erfinder: BIBER, Peter, 72119 Poltringen (DE); PETEREIT, Steffen, 71691 Freiberg A. N. (DE); KOCH, Christoph, 70178 Stuttgart (DE); ALBERT, Amos, 71229 Leonberg (DE)
(86) Internationale Anmeldenummer: PCT/EP2012/073023
(87) Internationale Veröffentlichungsnummer: WO 2013/104455

(56) Entgegenhaltungen:
- WO-A1-2006/087542
- DE-A1-102008 011 947
- US-A1- 2010 174 409

## Beschreibung

### Stand der Technik

Aus der DE 10 2008 011 947 ist bereits ein autonomes Arbeitsgerät, insbesondere ein autonomer Rasenmäher, bekannt, das eine Antriebseinheit, welche ein Antriebsrad aufweist, eine Sensoreinheit, eine Standortortungseinheit und eine Auswerteeinheit umfasst.

Ferner ist aus der WO 2006/087542 A1 ein autonomes Gerät mit einer Auswerteeinheit bekannt, die dazu vorgesehen ist, einen Schlupf eines Rades zu ermitteln.

### Offenbarung der Erfindung

Die Erfindung geht aus von einem autonomen Arbeitsgerät, insbesondere von einem autonomen Rasenmäher, mit zumindest einer Antriebseinheit, die zumindest ein Antriebsrad aufweist, mit zumindest einer Sensoreinheit, mit zumindest einer Standortortungseinheit und mit zumindest einer Auswerteeinheit, wobei
die Auswerteeinheit dazu vorgesehen ist, zu einer Ermittlung eines Schlupfs des zumindest einen Antriebsrads zumindest eine von der Sensoreinheit erfasste Kenngröße und zumindest eine von der Standortortungseinheit erfasste Kenngröße zu berücksichtigen, und mit zumindest einer Gehäuseeinheit, wobei die Auswerteeinheit dazu vorgesehen ist, zumindest eine Kenngröße einer von einer Vorwärtsbewegung verschiedenen Querbewegung der Gehäuseeinheit zu ermitteln.

Es wird vorgeschlagen, dass die Auswerteeinheit zumindest dazu vorgesehen ist, infolge von zumindest einer von der Sensoreinheit erfassten Kenngröße zumindest eine Neigung der Gehäuseeinheit um zumindest eine von einer Hochachse der Gehäuseeinheit verschiedenen Achse zu ermitteln, und die Auswerteeinheit dazu vorgesehen ist, zumindest den ermittelten Schlupf des Antriebsrads und die Neigung der Gehäuseeinheit zu einer Ermittlung der Kenngröße der Querbewegung zu berücksichtigen.

Die von der Hochachse der Gehäuseeinheit verschiedene Achse verläuft hierbei vorzugsweise zumindest im Wesentlichen senkrecht zur Hochachse. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Ferner wird zu einer Ermittlung durch die Auswerteeinheit mittels der Sensoreinheit zumindest eine weitere Kenngröße einer weiteren von der Hochachse der Gehäuseeinheit verschiedene Achse erfasst. Die weitere Achse verläuft hierbei zumindest im Wesentlichen senkrecht zur Hochachse und zumindest im Wesentlichen senkrecht zu der von der Hochachse der Gehäuseeinheit verschiedenen Achse. Somit bilden die Hochachse, die von der Hochachse der Gehäuseeinheit verschiedene Achse und die weitere von der Hochachse der Gehäuseeinheit verschiedene Achse bevorzugt ein kartesisches Koordinatensystem. Hierbei verlaufen die von der Hochachse der Gehäuseeinheit verschiedene Achse und die weitere von der Hochachse der Gehäuseeinheit verschiedene Achse in einer Ebene, die sich zumindest im Wesentlichen parallel zu einer Oberflächenebene eines Untergrunds, auf dem das autonome Arbeitsgerät in einem ordnungsgemäßen Betrieb betrieben werden kann oder auf dem das autonome Arbeitsgerät mit seinem Antriebsrad bzw. mit seinen Antriebsräder und/oder Stützrädern abgestellt werden kann, erstreckt. Hierbei wird die Oberflächenebene des Untergrunds insbesondere mittels einer Näherung von Maximalwerten des Untergrunds gebildet. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Mittels der erfindungsgemäßen Ausgestaltung kann vorteilhaft ein Neigungswinkel ermittelt werden. Hierdurch kann vorteilhaft eine Position des autonomen Arbeitsgeräts an einem Hang ermittelt werden bzw. die Position des autonomen Arbeitsgeräts am Hang kann vorteilhaft bei einer Ermittlung einer Fahrstrategie während einer Bearbeitung einer Fläche mittels des autonomen Arbeitsgeräts berücksichtigt werden. Es kann vorteilhaft ein effizientes Abfahren einer zu bearbeitenden Fläche realisiert werden.

Bevorzugt verläuft die Vorwärtsbewegung entlang der von der Hochachse der Gehäuseeinheit verschiedenen Achse. Zudem verläuft die Querbewegung vorzugsweise entlang der weiteren, von der Hochachse der Gehäuseeinheit verschiedenen Achse. Hierbei weist die Querbewegung besonders bevorzugt zumindest eine Bewegungskomponente auf, die zumindest im Wesentlichen parallel zu einer Rotationsachse des Antriebsrads, insbesondere bei einer feststehenden Achse, die entkoppelt von einer Drehbewegung um eine zumindest im Wesentlichen senkrecht zur Rotationsachse verlaufenden Achse ausgebildet ist. Besonders bevorzugt ist die Auswerteeinheit dazu vorgesehen, zumindest eine als laterale Geschwindigkeit ausgebildete Kenngröße der Gehäuseeinheit zu ermitteln. Somit kann vorteilhaft eine Querbeschleunigung des autonomen Arbeitsgeräts ermittelt werden, insbesondere bei einer Fahrt quer zu einem Hang. Hierdurch kann vorteilhaft eine Anpassung eines Fahrverhaltens während einer Hangfahrt des autonomen Arbeitsgeräts ermöglicht werden.

Bevorzugt ist die Auswerteeinheit dazu vorgesehen, zumindest den ermittelten Schlupf des Antriebsrads und die Neigung der Gehäuseeinheit zu einer Ermittlung einer lateralen Geschwindigkeit der Gehäuseeinheit zu berücksichtigen. Es ist jedoch auch denkbar, dass die Auswerteeinheit weitere, einem Fachmann als sinnvoll erscheinende Kenngrößen zur Ermittlung der lateralen Geschwindigkeit der Gehäuseeinheit berücksichtigt, wie beispielsweise eine Antriebsradgeometrie, ein Zustand des autonomen Arbeitsgeräts usw.

Unter einem "autonomen Arbeitsgerät" soll in diesem Zusammenhang insbesondere ein Gerät verstanden werden, welches eine Arbeit zumindest teilweise selbsttätig verrichtet, wie insbesondere selbsttätig beginnt, selbsttätig beendet und/oder selbsttätig zumindest einen Parameter, wie insbesondere einen Streckenparameter, und/oder einen Umkehrpunkt usw. auswählt. Besonders bevorzugt ist das Gerät dazu vorgesehen, eine Fläche abzufahren und insbesondere die Fläche zu bearbeiten, wie beispielsweise zu kehren, abzusaugen, zu reinigen und/oder einen auf der Fläche befindlichen Rasen zu mähen. Dabei sind verschiedene, dem Fachmann als sinnvoll erscheinende autonome Arbeitsgeräte denkbar, wie beispielsweise eine autonome Kehrmaschine, ein autonomer Staubsauger oder eine autonome Schwimmbadreinigungsmaschine usw. Besonders bevorzugt ist das autonome Arbeitsgerät von einem autonomen Rasenmäher gebildet.

Unter einer "Antriebseinheit" soll hier insbesondere eine Einheit verstanden werden, die zu einer Fortbewegung des autonomen Arbeitsgeräts vorgesehen ist. Vorzugsweise weist die Antriebseinheit eine elektrische, mechanische und/oder pneumatische Motoreinheit auf, die in einem Betrieb vorteilhaft zur Erzeugung einer Drehbewegung des Antriebsrads vorgesehen ist. Besonders bevorzugt ist die Motoreinheit als Elektromotor ausgebildet. Des Weiteren soll in diesem Zusammenhang unter einem "Antriebsrad" insbesondere ein Rad verstanden werden, welches zumindest teilweise direkt oder indirekt kraftschlüssig mit der Motoreinheit verbunden ist. Die Antriebseinheit ist bevorzugt als Differentialantriebseinheit ausgebildet. Hierbei weist die Differentialantriebseinheit vorzugsweise zwei Motoreinheiten und zwei Antriebsräder auf, wobei jeweils einem Antriebsrad eine Motoreinheit zugeordnet ist. Es ist jedoch auch denkbar, dass die Antriebseinheit eine andere, einem Fachmann als sinnvoll erscheinende Ausgestaltung aufweist, wie beispielsweise eine Ausgestaltung als Starrachsenantriebseinheit, bei der zwei Antriebsräder mittels einer durch die Motoreinheit angetriebene, starre Achse angetrieben werden, oder als Differentialgetriebeantriebseinheit, bei der zwei Antriebsräder über eine von der Motoreinheit angetriebenen Differentialgetriebeeinheit angetrieben werden usw. Bei der Ausgestaltung der Antriebseinheit als Differentialantriebseinheit ist das autonome Arbeitsgerät vorzugsweise entkoppelt von einer aktiven Lenkungseinheit, die zumindest ein gelenkig gelagertes Bewegungsrichtungsvorgaberad aufweist. Eine Richtungsänderung bei einer Bewegung des autonomen Arbeitsgeräts erfolgt bevorzugt mittels einer Ansteuerung der einzelnen Motoreinheiten, die jeweils zumindest einem der Antriebsräder zugeordnet sind.

Unter einer "Sensoreinheit" soll in diesem Zusammenhang insbesondere eine Einheit verstanden werden, die dazu vorgesehen ist, zumindest eine Kenngröße und/oder eine physikalische Eigenschaft aufzunehmen, wobei die Aufnahme aktiv, wie insbesondere durch Erzeugen und Aussenden eines elektrischen Messsignals, und/oder passiv, wie insbesondere durch eine Erfassung von Eigenschaftsänderungen eines Sensorbauteils, stattfinden kann. Es sind verschiedene, dem Fachmann als sinnvoll erscheinende Sensoreinheiten denkbar. Der Ausdruck "Standortortungseinheit" soll hier insbesondere eine Einheit definieren, die dazu vorgesehen ist, einen Standort, insbesondere einen globalen Standort, des autonomen Arbeitsgeräts infolge einer Erfassung von zumindest einer Kenngröße zu ermitteln. Besonders bevorzugt ist die Standortortungseinheit als Satellitennavigationsortungseinheit, insbesondere als GPS-Empfänger oder als Galileo-Empfänger, ausgebildet. Es ist jedoch auch denkbar, dass die Standortortungseinheit als Magnetkompass und/oder als Polarisationsfilterkompass usw. ausgebildet ist. Unter einer "Auswerteeinheit" soll in diesem Zusammenhang insbesondere eine Einheit mit einem Informationseingang, einer Informationsverarbeitung und einer Informationsausgabe verstanden werden. Vorteilhaft weist die Auswerteeinheit zumindest einen Prozessor, einen Speicher, ein Betriebsprogramm, Regelroutinen, Steuerroutinen und/oder Berechnungsroutinen auf. Besonders bevorzugt ist der Informationseingang mit einem Sensorelement der Sensoreinheit verbunden oder ist von einem Sensorelement der Sensoreinheit gebildet.

Unter einem "Schlupf eines Antriebsrads" soll hier insbesondere ein Verhältnis einer Differenz zwischen einer maximal zurücklegbaren Abrollstrecke des Antriebsrads auf einem Untergrund während einer Umdrehung des Antriebsrads und einer in einem Betrieb tatsächlich maximal zurückgelegten und durch Einflussfaktoren beeinflusste Abrollstrecke des Antriebsrads auf einem Untergrund während einer Umdrehung des Antriebsrads, zu der maximal zurücklegbaren Abrollstrecke des Antriebsrads verstanden werden und/oder es soll insbesondere ein Maß zu einer Bestimmung einer Gleitreibung zwischen dem Antriebsrad und einem Untergrund, auf der das Antriebsrad angeordnet ist, verstanden werden. Die maximal zurücklegbare Abrollstrecke des Antriebsrads wird insbesondere während einer Umdrehung entlang eines Winkelbereichs von 360° um eine Rotationsachse des Antriebsrads in einem zumindest im Wesentlichen unverformten Zustand des Antriebsrads betrachtet, wobei die Umdrehung des Antriebsrads zumindest im Wesentlichen entkoppelt von einer Gleitreibung ist. Die Einflussfaktoren der im Betrieb tatsächlich maximal zurückgelegten Abrollstrecke des Antriebsrads während einer Umdrehung entlang eines Winkelbereichs von 360° um die Rotationsachse des Antriebsrads können hierbei beispielsweise Gleitreibung, Verformung des Antriebsrads usw. sein. Somit liegt bei einem Durchdrehen des Antriebsrads, insbesondere bei einem Stillstehen des autonomen Arbeitsgeräts, während eines Antriebsvorgangs des Antriebsrads oder bei einem Blockieren des Antriebsrads während eines Bremsvorgangs ein Schlupf von 100 % vor. Unter einem "Schlupf eines Antriebsrads" kann zudem ein Verhältnis einer maximal möglichen Traktion des Antriebsrads auf einem Untergrund während einer Drehbewegung zu einer im Betrieb tatsächlich vorliegenden Traktion des Antriebsrads auf dem Untergrund während der Drehbewegung verstanden werden. Die Auswerteeinheit nutzt zu einer Ermittlung des Schlupfs des Antriebsrads einem Fachmann bereits bekannte Algorithmen zu einer Datenfusion, wie beispielsweise eine Kalmanfilterung usw. Hierbei können alle erfassten Kenngrößen zur Ermittlung des Schlupfs des Antriebsrads mittels der Auswerteeinheit in verschiedenen Abtastschritten oder in gleichen Abtastschritten vorliegen und die erfassten Kenngrößen können äquidistant oder inäquidistant eintreffen. Ferner ist die Auswerteeinheit besonders bevorzugt dazu vorgesehen, zusätzlich zur Ermittlung des Schlupfs des Antriebsrads zumindest einen Schlupf eines weiteren Antriebsrads der Antriebseinheit, das mittels einer weiteren Motoreinheit der Antriebseinheit antreibbar ist, zu ermitteln. Hierbei berücksichtigt die Auswerteeinheit vorzugsweise ebenfalls zumindest eine von der Sensoreinheit erfasste Kenngröße und zumindest eine von der Standortortungseinheit erfasste Kenngröße. Mittels der erfindungsgemäßen Ausgestaltung des autonomen Arbeitsgeräts kann vorteilhaft ein Schlupf ermittelt werden, der vorteilhaft zu einer Optimierung eines Fahrverhaltens des autonomen Arbeitsgeräts genutzt werden kann, insbesondere zu einer Optimierung einer Odometrie. Ferner kann ein vorteilhafter Vortrieb erreicht werden. Zudem können mittels der erfindungsgemäßen Ermittlung des Schlupfs des Antriebsrads vorteilhaft Untergrundbeschaffenheiten eines Untergrunds, auf dem das autonome Arbeitsgerät sich bewegt, abgeleitet werden. Hierbei kann beispielsweise in Abhängigkeit einer Größe eines Werts des Schlupfs darauf geschlossen werden, ob ein Untergrund feucht bzw. rutschig ist oder ob das autonome Arbeitsgerät immobil ist, da das Antriebsrad stetig durchdreht. Bei einer Ermittlung einer Immobilität des autonomen Arbeitsgeräts ist es denkbar, weitere, einem Fachmann als sinnvoll erscheinende Kenngrößen, wie beispielsweise eine Strom- und/oder Spannungscharakteristika der Motoreinheit zu berücksichtigen. Somit kann vorteilhaft eine Optimierung einer Odometrie des autonomen Arbeitsgeräts erreicht werden. Zudem kann vorteilhaft die Ermittlung des Schlupfs des Antriebsrads für eine Zustandserkennung beispielsweise eine Erkennung eines Verschleiß bzw. einer Abnutzung des Antriebsrads oder eines Getriebespiels genutzt werden, wobei diese Erkennung vorteilhaft genutzt werden kann, um eine Spurführung zu korrigieren oder ein Wartungssignal auszugeben.

Ferner wird vorgeschlagen, dass die Auswerteeinheit dazu vorgesehen ist, zumindest eine von der Sensoreinheit erfasste, als Drehzahl und/oder als Drehmoment ausgebildete Kenngröße zu berücksichtigen. Ferner ist es ebenfalls denkbar, dass die Auswerteeinheit zusätzlich oder alternativ zumindest eine durch die Sensoreinheit erfasste, als Geschwindigkeit, wie beispielsweise eine Winkelgeschwindigkeit, eine Tangentialgeschwindigkeit usw., ausgebildete Kenngröße berücksichtigt. Zudem ist es auch denkbar, dass die Auswerteeinheit zusätzlich oder alternativ zumindest eine durch die Sensoreinheit erfasste, als Strom und/oder als Spannung ausgebildete Kenngröße der Motoreinheit berücksichtigt. Es kann konstruktiv einfach eine Erfassung einer Kenngröße zur Ermittlung des Schlupfs des Antriebsrads ermöglicht werden.

Vorteilhafterweise ist die Auswerteeinheit zudem dazu vorgesehen, zumindest eine von der Standortortungseinheit erfasste, als Geschwindigkeit ausgebildete Kenngröße bei einer Ermittlung des Schlupfs zu berücksichtigen. Die Standortortungseinheit ermittelt die Geschwindigkeit bevorzugt über eine Messung eines Dopplereffektes oder über eine Messung einer numerischen Differenzierung des Ortes nach der Zeit. Es ist jedoch auch denkbar, dass die Standortortungseinheit die Geschwindigkeit auf eine andere, einem Fachmann als sinnvoll erscheinende Art und Weise misst bzw. erfasst. Ferner kann mittels der Standortortungseinheit eine Bewegungsrichtung des autonomen Arbeitsgeräts ermittelt werden und als künstlicher Kompass oder zur Ausrichtung von in der Auswerteeinheit gespeicherten elektronischen Karten dienen. Eine Ermittlung der Bewegungsrichtung beruht hierbei vorzugsweise ebenfalls auf dem Dopplereffekt. Ferner ist es denkbar, dass die Auswerteeinheit weitere, von der Standortortungseinheit erfasste Kenngrößen bei einer Ermittlung eines Schlupfs des Antriebsrads berücksichtigt. Mittels der erfindungsgemäßen Ausgestaltung kann vorteilhaft eine präzise Ermittlung des Schlupfs des Antriebsrads erfolgen, die besonderes bevorzugt zu einer Optimierung einer Navigation des autonomen Arbeitsgeräts erreicht werden.

Ferner ist die Auswerteeinheit vorteilhafterweise zur Ermittlung des Schlupfs des Antriebsrads dazu vorgesehen, zumindest eine von der Sensoreinheit erfasste, als Drehrate ausgebildete Kenngröße zu berücksichtigen. Hierbei umfasst die Sensoreinheit zumindest einen Drehratensensor zu einer Erfassung einer Drehrate, insbesondere eine Drehrate des Antriebsrads. Es ist jedoch auch denkbar, dass die Sensoreinheit andere, einem Fachmann als sinnvoll erscheinende Kenngrößen erfasst, die von der Auswerteeinheit zur Ermittlung des Schlupfs des Antriebsrads berücksichtigt werden, wie beispielsweise eine Geschwindigkeit (Winkelgeschwindigkeit, Rotationsgeschwindigkeit usw.), eine Drehzahl, ein Betriebszustand usw. Mittels der erfindungsgemäßen Ausgestaltung kann besonders vorteilhaft eine präzise Ermittlung des Schlupfs des Antriebsrads erfolgen.

Besonders bevorzugt umfasst die Sensoreinheit zumindest eine Inertialsensoreinheit. Unter einer "Inertialsensoreinheit" soll hier insbesondere eine Sensoreinheit verstanden werden, die zumindest einen Drehratensensor und einen Beschleunigungssensor aufweist. Vorzugsweise weist die Inertialsensoreinheit zumindest drei Drehratensensoren und drei Beschleunigungssensoren auf. Es ist jedoch auch denkbar, dass die Inertialsensoreinheit eine von drei abweichende Anzahl an Drehratensensoren und Beschleunigungssensoren aufweist. Insbesondere sind jeweils ein Drehratensensor und ein Beschleunigungssensor jeweils einer von drei Koordinatenachsen zugeordnet. Hierbei sind die Koordinatenachsen bevorzugt orthogonal zueinander angeordnet. Mittels der erfindungsgemäßen Ausgestaltung können vorteilhaft eine Erfassung von Beschleunigungswerten entlang zumindest einer Achse und eine Erfassung von Winkelwerten des autonomen Arbeitsgeräts um zumindest eine Achse erfolgen, um bei einer Ermittlung des Schlupfs des Antriebsrads durch die Auswerteeinheit berücksichtigt zu werden.

Des Weiteren wird vorgeschlagen, dass das autonome Arbeitsgerät zumindest eine Steuer- und/oder Regeleinheit umfasst, die dazu vorgesehen ist, ermittelte Daten der Auswerteeinheit zu einer Bestimmung und/oder zu einer Anpassung einer Fahrstrategie zu berücksichtigen. Unter einer "Steuer- und/oder Regeleinheit" soll insbesondere eine Einheit verstanden werden, die zumindest eine Prozessoreinheit, zumindest eine Speichereinheit sowie ein in der Speichereinheit gespeichertes Betriebsprogramm umfasst. Bevorzugt ist die Steuer- und/oder Regeleinheit dazu vorgesehen, aktiv in Abhängigkeit von ermittelten Daten der Auswerteeinheit ein Fahrverhalten des autonomen Arbeitsgeräts zu ändern bzw. anhand der mittels der Auswerteeinheit ermittelten Daten an neue Begebenheiten anzupassen. Es ist zudem denkbar, dass die Steuer- und/oder Regeleinheit infolge eines Werts des Schlupfs des Antriebsrads eine Drehzahl des Antriebsrads und/oder ein Drehmoment der Motoreinheit anpasst bzw. ändert. Es kann vorteilhaft eine effiziente Fahrstrategie zu einem Abfahren einer zu bearbeitenden Fläche erreicht werden. Ferner kann vorteilhaft bei einer Ausgestaltung des autonomen Arbeitsgeräts als autonomer Rasenmäher ein sauberes Mähbild und kurze Mähdauer erreicht werden. Ferner können vorteilhaft bei einer Ausgestaltung des autonomen Arbeitsgeräts als autonomer Rasenmäher Vielfachüberfahrungen der als Rasen ausgebildeten zu bearbeitenden Fläche erreicht werden, was den Rasen vorteilhaft schont. Weiterhin kann auf teure und technisch aufwändige Landmarken, die zudem ein ästhetisches Erscheinungsbild eines Arbeitsbereichs, insbesondere des Rasens, negativ beeinflussen, verzichtet werden.

Mit einer Auswerteeinheit für ein erfindungsgemäßes autonomes Arbeitsgerät können besonders vorteilhaft auch bereits bestehende autonome Arbeitsgeräte mit einer Auswerteeinheit nachgerüstet werden, um die oben genannten Vorteile zu erreichen.

Zudem geht die Erfindung aus von einem Verfahren für ein erfindungsgemäßes autonomes Arbeitsgerät, das zu einer Ermittlung des Schlupfs zumindest des Antriebsrads der Antriebseinheit vorgesehen ist. Hierbei werden zur Ermittlung des Schlupfs zumindest eine von der Sensoreinheit erfasste Kenngröße und zumindest eine von der Standortortungseinheit erfasste Kenngröße berücksichtigt und wobei zumindest eine Kenngröße einer von einer Vorwärtsbewegung verschiedenen Querbewegung der Gehäuseeinheit ermittelt wird, wobei vorgeschlagen wird, dass infolge von zumindest einer von der Sensoreinheit erfassten Kenngröße zumindest eine Neigung der Gehäuseeinheit um zumindest eine von einer Hochachse der Gehäuseeinheit verschiedenen Achse ermittelt wird, und zumindest der ermittelte Schlupf des Antriebsrads und die Neigung der Gehäuseeinheit zu einer Ermittlung der Kenngröße der Querbewegung berücksichtigt werden. Es kann vorteilhaft eine präzise Steuerung des autonomen Arbeitsgeräts erreicht werden.

Das erfindungsgemäße autonome Arbeitsgerät und/oder das erfindungsgemäße Verfahren soll/sollen hierbei nicht auf die oben beschriebene Anwendung und Ausführungsform beschränkt sein. Insbesondere kann das erfindungsgemäße autonome Arbeitsgerät und/oder Verfahren zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes autonomes Arbeitsgerät in einer schematischen Darstellung,
- Fig. 2: ein Blockdiagramm einer Ermittlung eines Schlupfs eines Antriebsrads einer Antriebseinheit des erfindungsgemäßen autonomen Arbeitsgeräts in einer schematischen Darstellung und
- Fig. 3: ein Blockdiagramm einer Ermittlung einer lateralen Geschwindigkeit des autonomen Arbeitsgeräts in einer schematischen Darstellung.

### Beschreibung des Ausführungsbeispiels

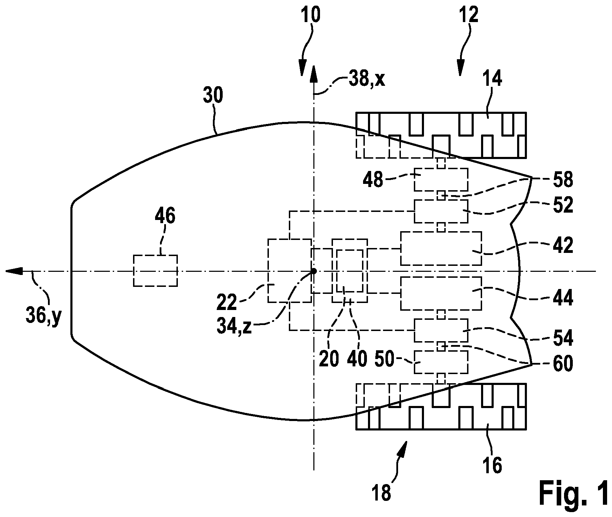

Figur 1 zeigt ein autonomes Arbeitsgerät 10, das von einem autonomen Rasenmäher gebildet wird, der zumindest ein, einem Fachmann bereits bekanntes Mähwerk (hier nicht näher dargestellt) aufweist. Das autonome Arbeitsgerät 10 umfasst zumindest eine Antriebseinheit 12, die zumindest ein Antriebsrad 14 aufweist, zumindest eine Sensoreinheit 18, zumindest eine Standortortungseinheit 20 und zumindest eine Auswerteeinheit 22. Die Auswerteeinheit 22 ist dazu vorgesehen, zu einer Ermittlung eines Schlupfs des zumindest einen Antriebsrads 14 zumindest eine von der Sensoreinheit 18 erfasste Kenngröße 24, 28, 32 und zumindest eine von der Standortortungseinheit 20 erfasste Kenngröße 26 zu berücksichtigen. Die Antriebseinheit 12 weist eine Motoreinheit 42 auf, die zu einem Antrieb des Antriebsrads 14 vorgesehen ist. Ferner weist die Antriebseinheit 12 eine weitere Motoreinheit 44 auf, die zu einem Antrieb eines weiteren Antriebsrads 16 der Antriebseinheit 12 vorgesehen ist. Die Motoreinheit 42 und die weitere Motoreinheit 44 sind als Elektromotoren ausgebildet. Ferner sind die Motoreinheit 42 und die weitere Motoreinheit 44 mittels einer Steuer- und/oder Regeleinheit 40 des autonomen Arbeitsgeräts 10 getrennt voneinander ansteuerbar. Somit bildet die Antriebseinheit 12 eine Differentialantriebseinheit. Eine Lenkungsfunktion wird hierbei mittels einer Drehzahldifferenz zwischen dem Antriebsrad 14 und dem weiteren Antriebsrad 16 auf eine, einem Fachmann bereits bekannte Art und Weise realisiert.

Die Motoreinheit 42 und die weitere Motoreinheit 44 sind innerhalb der Gehäuseeinheit 30 des autonomen Arbeitsgeräts 10 angeordnet. Hierbei sind die Motoreinheit 42 und die weitere Motoreinheit 44 jeweils über eine Welleneinheit 58,60 der Antriebseinheit 12 mit dem Antriebsrad 14 bzw. mit dem weiteren Antriebsrad 16 verbunden, wobei jeweils eine von zwei Getriebeeinheiten 48, 50 der Antriebseinheit 12 zwischen dem Antriebsrad 14 und der Motoreinheit 42 bzw. zwischen dem weiteren Antriebsrad 16 und der weiteren Motoreinheit 44 zu einer Über- und/oder Untersetzung angeordnet ist. Es ist jedoch auch denkbar, dass das Antriebsrad 14 und das weitere Antriebsrad 16 jeweils direkt mit der Motoreinheit 42 bzw. mit der weiteren Motoreinheit 44 verbunden sind. Das Antriebsrad 14 und das weitere Antriebsrad 16 sind jeweils an sich abgewandten Seiten der Gehäuseeinheit 30 angeordnet.

Das autonome Arbeitsgerät 10 weist zudem ein Stützrad 46 auf, das zusätzlich zu einer rotatorischen Lagerung um eine Rotationsachse des Stützrads 46 drehbar um eine Hochachse 34 einer Gehäuseeinheit 30 des autonomen Arbeitsgeräts 10 an der Gehäuseeinheit 30 gelagert ist. Die Rotationsachse des Stützrads 46 verläuft zumindest in einem Betriebszustand zumindest im Wesentlichen senkrecht zur Hochachse 34 der Gehäuseeinheit 30. In einer alternativen Ausgestaltung des autonomen Arbeitsgeräts 10 ist es denkbar, dass das Stützrad 46 lediglich rotatorisch um die Rotationsachse des Stützrads 46 an der Gehäuseeinheit 30 gelagert ist.

Die Auswerteeinheit 22 ist dazu vorgesehen, zu einer Ermittlung eines Schlupfs des Antriebsrads 14 und des weiteren Antriebsrads 16 zumindest jeweils eine von der Sensoreinheit 18 erfasste Kenngröße 24, 28, 32 und jeweils zumindest eine von der Standortortungseinheit 20 erfasste Kenngröße 26 zu berücksichtigen. Hierbei ist die Auswerteeinheit 22 dazu vorgesehen, zumindest eine von der Sensoreinheit 18 erfasste, als Drehzahl und/oder als Drehmoment des Antriebsrads 14 und/oder des weiteren Antriebsrads 16 ausgebildete Kenngröße 24 zu berücksichtigen. Somit umfasst die Sensoreinheit 18 zumindest zwei Drehzahlsensorelemente 52, 54. Eines der zwei Drehzahlsensorelemente 52, 54 ist dem Antriebsrad 14 zugeordnet und eines der Drehzahlsensorelemente 52, 54 ist dem weiteren Antriebsrad 16 zugeordnet. Es ist jedoch auch denkbar, dass die Sensoreinheit 18 zu einer Erfassung einer Drehzahl und/oder eines Drehmoments des Antriebsrads 14 und/oder des weiteren Antriebsrads 16 zusätzlich oder alternativ zwei Inkrementalgeberelemente (hier nicht näher dargestellt) aufweist oder dass eine Radgeschwindigkeit mittels eines Herleitens aus einer Strom- und/oder Spannungsmessung an der Motoreinheit 42 bzw. der weiteren Motoreinheit 44 durch die Sensoreinheit 18 erfasst wird, die von der Auswerteeinheit 22 berücksichtigt wird.

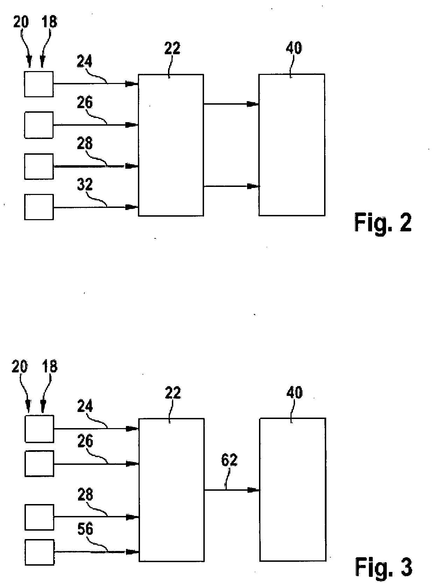

Des Weiteren ist die Auswerteeinheit 22 dazu vorgesehen, zumindest eine von der Standortortungseinheit 20 erfasste, als Geschwindigkeit ausgebildete Kenngröße 26 bei einer Ermittlung des Schlupfs zu berücksichtigen (Figur 2). Zudem ist die Auswerteeinheit 22 dazu vorgesehen, zumindest eine von der Sensoreinheit 18 erfasste, als Drehrate ausgebildete Kenngröße 28 zu berücksichtigen. Hierbei wird mittels der Sensoreinheit 18 eine als Drehrate ausgebildete Kenngröße 28 um die Hochachse 34 der Gehäuseeinheit 30 erfasst. Die Sensoreinheit 18 umfasst somit zumindest eine Inertialsensoreinheit bzw. wird teilweise von einer Inertialsensoreinheit gebildet. Die Inertialsensoreinheit umfasst zumindest ein Drehratensensorelement (hier nicht näher dargestellt) und zumindest ein Beschleunigungssensorelement (hier nicht näher dargestellt). Insgesamt umfasst die Inertialsensoreinheit drei Drehratensensorelemente und drei Beschleunigungssensorelemente. Hierbei sind jeweils ein Drehratensensorelement und ein Beschleunigungssensorelement einer von drei orthogonal zueinander ausgerichteten Koordinatenachsen x, y, z auf eine, einem Fachmann bereits bekannte Art und Weise zugeordnet. Die Hochachse 34 der Gehäuseeinheit 30 bildet hierbei eine der Koordinatenachsen x, y, z.

Mittels der von der Sensoreinheit 18 erfassten Kenngrößen 24, 28, 32 und mittels der von der Standortortungseinheit 20 erfassten Kenngrößen 26 ermittelt die Auswerteeinheit 22 mittels einem Fachmann bereits bekannter Algorithmen zu einer Sensordiffusion einen Schlupf des Antriebsrads 14 und/oder des weiteren Antriebsrads 16. Ferner ist es denkbar, dass die Auswerteeinheit 22 zur Ermittlung eines Schlupfs des Antriebsrads 14 und/oder des weiteren Antriebsrads 16 zusätzlich zu den bereits oben genannten Kenngrößen 24, 26, 28 eine als Beschleunigung ausgebildete Kenngröße 32 berücksichtigt (Figur 2), die beispielsweise von einem der drei Beschleunigungssensoren der Inertialsensoreinheit erfasst wird. Somit kann die Auswerteeinheit 22 einen Schlupf des Antriebsrads 14 unabhängig von einem Schlupf des weiteren Antriebsrads 16 ermitteln. Anschließend an eine Ermittlung eines Schlupfs des Antriebsrads 14 und/oder des weiteren Antriebsrads 16 werden von der Auswerteeinheit 22 ermittelte Daten an die Steuer- und/oder Regeleinheit 40 über Datenleitungen übertragen.

Die Steuer- und/oder Regeleinheit 40 ist dazu vorgesehen, ermittelte Daten der Auswerteeinheit 22 zu einer Bestimmung und/oder zu einer Anpassung einer Fahrstrategie des autonomen Arbeitsgeräts 10 zu berücksichtigen. Die Steuer- und/oder Regeleinheit 40 greift somit aktiv in ein Betriebsprogramm des autonomen Arbeitsgeräts 10 ein, um eine vorher bereits im Betriebsprogramm vorhandene Fahrstrategie zu ändern. Des Weiteren ist die Steuer- und/oder Regeleinheit 40 dazu vorgesehen, mittels der von der Auswerteeinheit 22 ermittelten Daten Rückschlüsse auf eine Untergrundbeschaffenheit, wie beispielsweise eine Nässe, einen losen Untergrund usw., zu ziehen Die Steuer- und/oder Regeleinheit 40 kann somit ein gerade vom autonomen Arbeitsgerät 10 ausgeführtes Fahrmanöver anhand der mittels der Auswerteeinheit 22 ermittelten Daten verändern bzw. anpassen, wie beispielsweise ein Abbruch eines Betriebs wegen einer Immobilität des autonomen Arbeitsgeräts 10, das durch ein Vorherrschen eines Schlupfs von ca. 100 % über einen Zeitraum von mehr als 10 s geschätzt werden kann, oder eine Rückkehr zu einer Ladestation usw.

Des Weiteren ist die Sensoreinheit 18 dazu vorgesehen, eine Beschleunigung des autonomen Arbeitsgeräts 10 entlang zwei orthogonal angeordneter Achsen 36, 38, die zumindest im Wesentlichen senkrecht zur Hochachse 34 verlaufen, zu erfassen. Die beiden Achsen 36, 38 werden von zwei der drei Koordinatenachsen x, y, z gebildet. Zur Erfassung einer als Beschleunigung ausgebildeten Kenngröße 56 mittels der Sensoreinheit 18 werden die Beschleunigungssensoren der Inertialsensoreinheit genutzt. Nach einem Erfassen einer als Beschleunigung ausgebildeten Kenngröße 56 mittels der Sensoreinheit 18 erfolgt zunächst eine Rauschunterdrückung mittels eines Filters der Auswerteeinheit 22 (Figur 3).

Daraufhin erfolgt eine statische Auswertung der als Beschleunigung ausgebildeten Kenngröße 56 mittels der Auswerteeinheit 22, wobei die statische Auswertung lediglich Einflüsse einer Gravitationskraft aufweist, deren Betrag von einer Neigung der Gehäuseeinheit 30 um eine von zwei der drei Koordinatenachsen x, y, z, welche verschieden von der Hochachse 34 sind und in einer gemeinsamen Ebene angeordnet sind, abhängt. Mittels der von der Sensoreinheit 18 erfassten und als Beschleunigung ausgebildeten Kenngröße 56 und einer Gravitationskonstante lassen sich eine als Nickwinkel und/oder eine als Rollwinkel der Gehäuseeinheit 30 ausgebildete Kenngröße 62 mittels der Auswerteeinheit 22 ermitteln. Somit ist die Auswerteeinheit 22 zumindest dazu vorgesehen ist, infolge von zumindest einer von der Sensoreinheit 18 erfassten Kenngröße 32 zumindest eine Neigung der Gehäuseeinheit 30 um zumindest eine von der Hochachse 34 der Gehäuseeinheit 30 verschiedene Achse 36, 38 zu ermitteln. Anschließend überträgt die Auswerteeinheit 22 ermittelte Daten an die Steuer- und/oder Regeleinheit 40, die zu einer Kompensierung eines seitlichen Abrutschens bei einer Bewegung des autonomen Arbeitsgeräts 10 berücksichtigt werden. Die ermittelte Neigung eines Teilbereichs einer zu bearbeitenden Fläche wird daraufhin in einem unflüchtigen Speicher der Steuer- und/oder Regeleinheit 40 gesichert, um auf einer im Speicher hinterlegten, virtuellen Navigationsmarke kartiert zu werden.

Zudem ist die Auswerteeinheit 22 dazu vorgesehen, zumindest eine Kenngröße 56 einer von einer Vorwärtsbewegung verschiedenen Querbewegung der Gehäuseeinheit 30 zu ermitteln (Figur 3). Die Kenngröße 56 der von der Vorwärtsbewegung verschiedenen Querbewegung wird von einer lateralen Geschwindigkeit der Gehäuseeinheit 30 gebildet. Die laterale Geschwindigkeit der Gehäuseeinheit 30 verläuft zumindest im Wesentlichen parallel zu einer Rotationsachse des Antriebsrads 14 und/oder des weiteren Antriebsrads 16. Hierbei ist die Auswerteeinheit 22 dazu vorgesehen, zumindest den ermittelten Schlupf des Antriebsrads 14 und/oder des weiteren Antriebsrads 16 und die Neigung der Gehäuseeinheit 30 zu einer Ermittlung der Kenngröße 56 der Querbewegung zu berücksichtigen. Die Neigung der Gehäuseeinheit 30 wird hierbei durch eine als Rollwinkel der Gehäuseeinheit 30 ausgebildete Kenngröße 62 definiert. Je größer der Rollwinkel ist, desto größer ist die laterale Geschwindigkeit der Gehäuseeinheit 30. Der Rollwinkel wird von einem Winkel um eine Hauptbewegungsachse des autonomen Arbeitsgeräts 10 gebildet. Die Hauptbewegungsachse wird von einer der Achsen 36, 38 gebildet, die zumindest im Wesentlichen senkrecht zu einer Rotationsachse des Antriebsrads 14 verläuft. Der mittels der Auswerteeinheit 22 ermittelte Schlupf kann bei einer Ermittlung der lateralen Geschwindigkeit der Gehäuseeinheit 30 mit Langzeitdaten zu bereits ermittelten Werten eines Schlupfs aus einem nichtflüchtigen Speicher der Auswerteeinheit 22 verglichen werden, um somit eine Untergrundbeschaffeneinheit abzuschätzen, die bei der Ermittlung der lateralen Geschwindigkeit der Gehäuseeinheit 30 von der Auswerteeinheit 22 berücksichtigt wird.

Zudem ist die Auswerteeinheit 22 dazu vorgesehen, über die Drehzahlsensorelemente 52, 54 der Sensoreinheit 18 erfasste Kenngrößen eine Geschwindigkeit des Antriebsrads 14 und eine Geschwindigkeit des weiteren Antriebsrads 16 zu ermitteln, die zu einer Ermittlung der lateralen Geschwindigkeit der Gehäuseeinheit 30 berücksichtigt werden. Mittels eines Algorithmus der Auswerteeinheit 22, der einen Kamm'schen-Kreis bei einer Auswertung von Daten berücksichtigt, wird ein Einfluss der Geschwindigkeit des Antriebsrads 14 und der Geschwindigkeit des weiteren Antriebsrads 16 auf Seitenführungskräfte des Antriebsrads 14 und des weiteren Antriebsrads 16 von der Auswerteeinheit 22 ermittelt. Je größer die Geschwindigkeit des Antriebsrads 14 und/oder die Geschwindigkeit des weiteren Antriebsrads 16 ist, desto geringer ist die Seitenführungskraft des Antriebsrads 14 und/oder des weiteren Antriebsrads 16. Somit ist bei einer geringen Seitenführungskraft eine Wahrscheinlichkeit einer Querbewegung der Gehäuseeinheit 30 groß. Ferner ist es denkbar, dass die Auswerteeinheit 12 zusätzlich oder alternativ Kenngrößen der Standortortungseinheit 20 zu einer Ermittlung einer Kenngröße 56 der von der Vorwärtsbewegung verschiedenen Querbewegung der Gehäuseeinheit 30 berücksichtigt. Die Steuer- und/oder Regeleinheit 40 verarbeitet die von der Auswerteeinheit 22 ermittelten Daten, die an die Steuer- und/oder Regeleinheit 40 übertragen werden, um einen Einfluss der lateralen Geschwindigkeit der Gehäuseeinheit 30, beispielsweise bei einer Fahrt des autonomen Arbeitsgeräts 10 quer zu einem Hang, bei einer Bestimmung und/oder zu einer Anpassung einer Fahrstrategie zu berücksichtigen.

Weitere Einflussfaktoren für die laterale Geschwindigkeit der Gehäuseeinheit 30 sind Geometrie des Antriebsrads 14 und des weiteren Antriebsrads 16, Profile des Antriebsrads 14 und des weiteren Antriebsrads 16, Verschleiß an dem Antriebsrad 14 und dem weiteren Antriebsrad 16, Lagerspiel in Lagerstellen des Antriebsrads 14 und des weiteren Antriebsrads 16, eine Anordnung eines Schwerpunkt des autonomen Arbeitsgeräts 10 usw. Die Steuer- und/oder Regeleinheit 40 ist dazu vorgesehen, die Einflussfaktoren zusätzlich zu den durch die Auswerteeinheit 22 ermittelten Daten zum Schlupf, zur Neigung und zur lateralen Geschwindigkeit bei einer Bestimmung und/oder zu einer Anpassung einer Fahrstrategie zu berücksichtigen. Hierbei lässt sich ein physikalisch motiviertes oder ein heuristisch/experimentelles Modell ableiten, das eine Berücksichtigung der Einflussfaktoren durch die Steuer- und/oder Regeleinheit 40 ermöglicht. Hierdurch werden die Einflussfaktoren und die durch die Auswerteeinheit 22 ermittelten Daten zum Schlupf und zur Neigung bei einer Ermittlung der lateralen Geschwindigkeit berücksichtigt.

## Patentansprüche

1. Autonomes Arbeitsgerät, insbesondere autonomer Rasenmäher, mit zumindest einer Antriebseinheit (12), die zumindest ein Antriebsrad (14, 16) aufweist, mit zumindest einer Sensoreinheit (18), mit zumindest einer Standortortungseinheit (20), mit zumindest einer Auswerteeinheit (22), wobei die Auswerteeinheit (22) dazu vorgesehen ist, zu einer Ermittlung eines Schlupfs des zumindest einen Antriebsrads (14, 16) zumindest eine von der Sensoreinheit (18) erfasste Kenngröße (24, 28, 32) und zumindest eine von der Standortortungseinheit (20) erfasste Kenngröße (26) zu berücksichtigen, und mit zumindest einer Gehäuseeinheit (30), wobei die Auswerteeinheit (22) dazu vorgesehen ist, zumindest eine Kenngröße (56) einer von einer Vorwärtsbewegung verschiedenen Querbewegung der Gehäuseeinheit (30) zu ermitteln, **dadurch gekennzeichnet, dass** die Auswerteeinheit (22) zumindest dazu vorgesehen ist, infolge von zumindest einer von der Sensoreinheit (18) erfassten Kenngröße (32) zumindest eine Neigung der Gehäuseeinheit (30) um zumindest eine von einer Hochachse (34) der Gehäuseeinheit (30) verschiedenen Achse (36, 38) zu ermitteln, und die Auswerteeinheit (22) dazu vorgesehen ist, zumindest den ermittelten Schlupf des Antriebsrads (14, 16) und die Neigung der Gehäuseeinheit (30) zu einer Ermittlung der Kenngröße (56) der Querbewegung zu berücksichtigen.

2. Autonomes Arbeitsgerät nach Anspruch 1, **dadurch gekennzeichnet, dass** die Auswerteeinheit (22) dazu vorgesehen ist, zumindest eine von der Sensoreinheit (18) erfasste, als Drehzahl und/oder als Drehmoment ausgebildete Kenngröße (24) zu berücksichtigen.

3. Autonomes Arbeitsgerät nach einem der vorhergehenden Ansprüche, **dadurch gekennzeichnet, dass** die Auswerteeinheit (22) dazu vorgesehen ist, zumindest eine von der Standortortungseinheit (20) erfasste, als Geschwindigkeit ausgebildete Kenngröße (26) bei einer Ermittlung des Schlupfs zu berücksichtigen.

4. Autonomes Arbeitsgerät nach einem der vorhergehenden Ansprüche, **dadurch gekennzeichnet, dass** die Auswerteeinheit (22) dazu vorgesehen ist, zumindest eine von der Sensoreinheit (18) erfasste, als Drehrate ausgebildete Kenngröße (28) zu berücksichtigen.

5. Autonomes Arbeitsgerät nach einem der vorhergehenden Ansprüche, **dadurch gekennzeichnet, dass** die Sensoreinheit (18) zumindest eine Inertialsensoreinheit umfasst.

6. Autonomes Arbeitsgerät nach einem der vorhergehenden Ansprüche, **gekennzeichnet durch** zumindest eine Steuer- und/oder Regeleinheit (40), die dazu vorgesehen ist, ermittelte Daten der Auswerteeinheit (22) zu einer Bestimmung und/oder zu einer Anpassung einer Fahrstrategie zu berücksichtigen.

7. Verfahren für ein autonomes Arbeitsgerät nach einem der Ansprüche 1 bis 6 zu einer Ermittlung des Schlupfs zumindest des Antriebsrads (14, 16) der Antriebseinheit (12), wobei zur Ermittlung des Schlupfs zumindest eine von der Sensoreinheit (18) erfasste Kenngröße (24, 28, 32) und zumindest eine von der Standortortungseinheit (20) erfasste Kenngröße (26) berücksichtigt werden und wobei zumindest eine Kenngröße (56) einer von einer Vorwärtsbewegung verschiedenen Querbewegung der Gehäuseeinheit (30) ermittelt wird, **dadurch gekennzeichnet, dass** infolge von zumindest einer von der Sensoreinheit (18) erfassten Kenngröße (32) zumindest eine Neigung der Gehäuseeinheit (30) um zumindest eine von einer Hochachse (34) der Gehäuseeinheit (30) verschiedenen Achse (36, 38) ermittelt wird, und zumindest der ermittelte Schlupf des Antriebsrads (14, 16) und die Neigung der Gehäuseeinheit (30) zu einer Ermittlung der Kenngröße (56) der Querbewegung berücksichtigt werden.

## Claims

1. Autonomous implement, in particular autonomous lawnmower, having at least one drive unit (12) that comprises at least one drive wheel (14, 16) having at least one sensor unit (18), having at least one location-determining unit (20), having at least one evaluating unit (22), wherein for the purpose of determining a slip of the at least one drive wheel (14, 16) the evaluating unit (22) is provided for the purpose of taking into account at least one characteristic value (24, 26, 32) that is detected by the sensor unit (18) and at least one characteristic value (28) that is detected by the location-determining unit (20), and having at least one housing unit (30), wherein the evaluating unit (22) is provided for the purpose of determining at least one characteristic value (56) of a lateral movement of the housing unit (30) that is different to a forwards movement, **characterized in that** the evaluating unit (22) is provided at least for the purpose of determining at least one tilt of the housing unit (30) about at least one of the axes (36, 38) that are different to a vertical axis (34) of the housing unit (30) as a consequence of at least one characteristic value (32) that is detected by the sensor unit (18), and the evaluating unit (22) is provided for the purpose of taking into account at least the determined slip of the drive wheel (14, 16) and the tilt of the housing unit (30) for the purpose of determining the characteristic value (56) of the lateral movement.

2. Autonomous implement according to Claim 1, **characterized in that** the evaluating unit (22) is provided for the purpose of taking into account at least one characteristic value (24) that is detected by the sensor unit (18) and is embodied as the rotational speed and/or the torque.

3. Autonomous implement according to any one of the preceding claims, **characterized in that** the evaluating unit (22) is provided for the purpose of taking into account at least one characteristic value (26) that is detected by the location-determining unit (20) and is embodied as the velocity in the case of determining the slip.

4. Autonomous implement according to any one of the preceding claims, **characterized in that** the evaluating unit (22) is provided for the purpose of taking into account at least one characteristic value (28) that is detected by the sensor unit (18) and embodied as a rotational speed.

5. Autonomous implement according to any one of the preceding claims, **characterized in that** the sensor unit (18) comprises at least one inertial sensor unit.

6. Autonomous implement according to any one of the preceding claims, **characterized by means of** at least one control and/or regulating unit (40) that is provided for the purpose of taking into account determined data of the evaluating unit (22) for the purpose of determining and/or adjusting a driving strategy.

7. Method for an autonomous implement according to any one of Claims 1 to 6 for the purpose of determining the slip at least of the drive wheel (14, 16) of the drive unit (12), wherein at least one characteristic value (24, 28, 32) that is detected by the sensor unit (18) and at least one characteristic value (26) that is detected by the location-determining unit (20) are taken into account for the purpose of determining the slip and wherein at least one characteristic value (56) of a lateral movement of the housing unit (30) that is different to a forwards movement is determined, **characterized in that** at least one tilt of the housing unit (30) about at least one axis (36, 38) that is different to a vertical axis (34) of the housing unit (30) is determined as a consequence of at least one characteristic value (32) that is detected by the sensor unit (18), and at least the determined slip of the drive wheel (14, 16) and the tilt of the housing unit (30) are taken into account for the purpose of determining the characteristic value (56) of the lateral movement.

## Revendications

1. Dispositif de travail autonome, en particulier tondeuse à gazon autonome, avec au moins une unité de propulsion (12), qui présente au moins une roue motrice (14, 16), avec au moins une unité de capteur (18), avec au moins une unité de localisation d'emplacement (20), avec au moins une unité d'évaluation (22), dans lequel l'unité d'évaluation (22) est prévue, pour une détermination d'un patinage de ladite au moins une roue motrice (14, 16), pour tenir compte d'au moins une grandeur caractéristique (24, 28, 32) détectée par l'unité de capteur (18) et d'au moins une grandeur caractéristique (26) détectée par l'unité de localisation d'emplacement (20), et avec au moins une unité de boîtier (30), dans lequel l'unité d'évaluation (22) est prévue pour déterminer au moins une grandeur caractéristique (56) d'un déplacement transversal de l'unité de boîtier (30) différent d'un déplacement vers l'avant, **caractérisé en ce que** l'unité d'évaluation (22) est prévue au moins pour déterminer, à la suite d'au moins une grandeur caractéristique (32) détectée par l'unité de capteur (18), au moins une inclinaison de l'unité de boîtier (30) autour d'au moins un axe (36, 38) différent d'un axe vertical (34) de l'unité de boîtier (30), et l'unité d'évaluation (22) est prévue pour tenir compte au moins du patinage déterminé de la roue motrice (14, 16) et de l'inclinaison de l'unité de boîtier (30) pour une détermination de la grandeur caractéristique (56) du déplacement transversal.

2. Dispositif de travail autonome selon la revendication 1, **caractérisé en ce que** l'unité d'évaluation (22) est prévue pour tenir compte d'au moins une grandeur caractéristique (24) détectée par l'unité de capteur (18) et présentée sous forme de vitesse de rotation et/ou de couple moteur.

3. Dispositif de travail autonome selon l'une quelconque des revendications précédentes, **caractérisé en ce que** l'unité d'évaluation (22) est prévue pour tenir compte d'au moins une grandeur caractéristique (26) détectée par l'unité de localisation d'emplacement (20), présentée sous forme de vitesse, lors d'une détermination du patinage.

4. Dispositif de travail autonome selon l'une quelconque des revendications précédentes, **caractérisé en ce que** l'unité d'évaluation (22) est prévue pour tenir compte d'au moins une grandeur caractéristique (28) détectée par l'unité de capteur (18) et présentée sous forme de taux de giration.

5. Dispositif de travail autonome selon l'une quelconque des revendications précédentes, **caractérisé en ce que** l'unité de capteur (18) comprend au moins une unité de capteur inertiel.

6. Dispositif de travail autonome selon l'une quelconque des revendications précédentes, **caractérisé par** au moins une unité de commande et/ou de régulation (40), qui est prévue pour tenir compte de données déterminées de l'unité d'évaluation (22) pour une détermination et/ou pour une adaptation d'une stratégie de marche.

7. Procédé pour un dispositif de travail autonome selon l'une quelconque des revendications 1 à 6 pour une détermination du patinage au moins de la roue motrice (14, 16) de l'unité de propulsion (12), dans lequel on tient compte, pour la détermination du patinage, d'au moins une grandeur caractéristique (24, 28, 32) détectée par l'unité de capteur (18) et d'au moins une grandeur caractéristique (26) détectée par l'unité de localisation d'emplacement (20), et dans lequel on détermine au moins une grandeur caractéristique (56) d'un déplacement transversal de l'unité de boîtier (30) différent d'un déplacement vers l'avant, **caractérisé en ce que** par suite d'au moins une grandeur caractéristique (32) détectée par l'unité de capteur (18), on détermine au moins une inclinaison de l'unité de boîtier (30) autour d'au moins un axe (36, 38) différent d'un axe vertical (34) de l'unité de boîtier (30), et on tient compte au moins du patinage déterminé de la roue motrice (14, 16) et de l'inclinaison de l'unité de boîtier (30) pour une détermination de la grandeur caractéristique (56) du déplacement transversal.
